(19) Europäisches Patentamt / European Patent Office / Office européen des brevets

(11) **EP 2 407 910 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
**G06K 9/00** *(2006.01)* **G06K 9/46** *(2006.01)*
**H03M 7/40** *(2006.01)*

(21) Anmeldenummer: **10169527.8**

(22) Anmeldetag: **14.07.2010**

(54) **Verfahren und Vorrichtung zum Erstellen einer Objekt-Datenbank und zum Auffinden von Objekten**

Method and device for producing an object database and finding objects

Procédé et dispositif de création d'une base de données d'objets et de recherche d'objets

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**18.01.2012 Patentblatt 2012/03**

(73) Patentinhaber: **Deutsche Telekom AG**
**53113 Bonn (DE)**

(72) Erfinder: **Kölln, Florian**
**12163 Berlin (DE)**

(74) Vertreter: **Vossius & Partner**
**Patentanwälte Rechtsanwälte mbB**
**Siebertstrasse 3**
**81675 München (DE)**

(56) Entgegenhaltungen:
**EP-A2- 2 138 957**

- ELISA D. GELASCA ET AL.: "CORTINA: SEARCHING A 10 MILLION + IMAGES DATABASE", PROCEEDINGS OF THE 33RD INTERNATIONAL CONFERENCE ON VERY LARGE DATA BASES, 23. September 2007 (2007-09-23), - 28. September 2007 (2007-09-28), Seiten 1-8, XP002613830, VIENNA, AUSTRIA
- Till Quack: "Cortina: A System for Large-scale, Content-based Web Image Retrieval and the Semantics within", 1. April 2004 (2004-04-01), XP002613831, * Seite 12 - Seite 16 * * Tabelle 2.1 * * Tabelle 3.2 * * Tabelle 3.6 * * Abbildung 4.2 * * Abbildung 4.3 *
- ONDREY CHUM, JAMES PHILBIN, ANDREW ZISSERMAN: "Near Duplicate Image Detection: min-Hash and tf-idf Weighting", BRITISH MACHINE VISION CONFERENCE 2008, 1. September 2008 (2008-09-01), - 4. September 2008 (2008-09-04), Seiten 1-10, XP002613832, LEEDS, UK
- GIONIS A ET AL: "Similarity search in high dimensions via hashing", PROCEEDINGS OF THE INTERNATIONAL CONFERENCE ON VERY LARGEDATA BASES, XX, XX, 7. September 1999 (1999-09-07), Seiten 518-529, XP002256564,
- XIN SHUAI ET AL: "Fingerprint indexing based on composite set of reduced SIFT features", 19TH INTERNATIONAL CONFERENCE ON PATTERN RECOGNITION, 2008: ICPR 2008; 8 - 11 DEC. 2008, TAMPA, FLORIDA, USA, IEEE, PISCATAWAY, NJ, 8. Dezember 2008 (2008-12-08), Seiten 1-4, XP031412466, ISBN: 978-1-4244-2174-9
- EVA HÖRSTER, RAINER LIENHART, MALCOLM SLANEY: "Image retrieval on large-scale image databases", PROCEEDINGS OF THE 6TH ACM INTERNATIONAL CONFERENCE ON IMAGE AND VIDEO RETRIEVAL, 9. Juli 2007 (2007-07-09), - 11. Juli 2007 (2007-07-11), Seiten 17-24, XP002613833, Amsterdam, NL
- DAVID G LOWE: "Distinctive Image Features from Scale-Invariant Keypoints", INTERNATIONAL JOURNAL OF COMPUTER VISION, KLUWER ACADEMIC PUBLISHERS, BO, Bd. 60, Nr. 2, 1. November 2004 (2004-11-01), Seiten 91-110, XP019216426, ISSN: 1573-1405, DOI: DOI:10.1023/B:VISI.0000029664.99615.94

- CHAO ZHU ET AL: "Visual object recognition using local binary patterns and segment-based feature", IMAGE PROCESSING THEORY TOOLS AND APPLICATIONS (IPTA), 2010 2ND INTERNATIONAL CONFERENCE ON, IEEE, PISCATAWAY, NJ, USA, 7. Juli 2010 (2010-07-07), Seiten 426-431, XP031764050, ISBN: 978-1-4244-7247-5
- V. CHANDRASEKHAR, M. MAKAR, G. TAKACS, D. CHEN, S.S. TSAI, N.-M.CHEUNG, R. GRZESZCZUK, Y. REZNIK, B. GIROD: "Survey of SIFT Compression Schemes", PROCEEDINGS OF THE SECOND INTERNATIONAL WORKSHOP ON MOBILE MULTIMEDIA PROCESSING, 23. August 2010 (2010-08-23), - 26. August 2010 (2010-08-26), XP002631251,

- MARIO A. NASCIMENTO ET AL: "Image indexing and retrieval using signature trees", DATA & KNOWLEDGE ENGINEERING, Bd. 43, Nr. 1, 1. Oktober 2002 (2002-10-01), Seiten 57-77, XP002631259,

**Beschreibung**

Die Erfindung betrifft ein Verfahren und eine Vorrichtung zum Erstellen einer Objekt-Datenbank und zum Auffinden von Objekten in der Datenbank. Die Erfindung betrifft insbesondere ein Verfahren und eine Vorrichtung zum Erstellen einer Bildmerkmals-Datenbank sowie die zugehörige Speicherung und schnelle Suche von Bildmerkmalen.

**Technischer Hintergrund**

Bekannte Verfahren zur Bilderkennung versuchen mittels eines Anfragebildes, das z.B. durch Fotografie eines realen Objektes gewonnen wurde, das Bild in einer zuvor erstellten Bildsammlung zu finden, das einem Foto eines identischen realen Objektes entspricht. Dazu werden in Bilderkennungsverfahren eine Anzahl von Bildmerkmalen (features genannt) aus jedem Bild extrahiert. Diese Bildmerkmale sind je nach dem angewandten Verfahren mehr oder weniger empfindlich gegen Veränderung des Bildes wie etwa eine Drehung oder eine Verzerrung des Bildes.

Die US 6 711 293 B1 (siehe [1]) beschreibt ein Verfahren und eine Vorrichtung zum Identifizieren von Merkmalen in einem Bild, wobei die Merkmale eine gleichbleibende Größe aufweisen. Bei diesem bekannten Verfahren wird eine skalierungsunabhängige Merkmalstransformation SIFT (scale-invariant feature transform) zur Extraktion lokaler Bildmerkmale aus Abbildungen angewendet. In einem ersten Schritt wird mindestens ein Differenzbild erzeugt, indem eine Ausgangsbild verrauscht wird und dieses verrauschte Bild von dem Ausgangsbild subtrahiert wird. In dem Differenzbild werden Bildpunktamplitudenextremwerte gesucht und ein jeweils entsprechender Bildpunktbereich definiert, der den jeweiligen der Bildpunktamplitudenextremwerte umgibt. Jeder Bildpunktbereich wird unterteilt in Unterbereiche und es werden für jeden Unterbereich Deskriptoren für Komponenten des Unterbereichs erzeugt. Diese Deskriptoren werden mit den Deskriptoren von Komponenten von Unterbereichen eines zu untersuchenden Bildes korreliert. Ein Bild wird dann als erkanntes Objekt bewertet, wenn eine bestimmte Anzahl von Deskriptoren, in diesem Fall skalierungsunabhängigen Merkmalen (scale invariant features) eine aufsummierte Korrelation definieren, die einen Korrelationsschwellwert mit dem zu dem Objekt gehörenden Deskriptoren überschreiten. Dieses von David G. Lowe entwickelte Verfahren kann auch bei der vorliegenden Erfindung eingesetzt werden, wobei für die vorliegende Erfindung auch jedes andere Verfahren eingesetzt werden kann, bei dem zur Beschreibung von Bildmerkmalen Vektoren erzeugt werden.

Ein weiteres Verfahren wurde von Krystian Mikolajczyk und Cordelia Schmid beschrieben, dass als "GLOH" (gradient location and orientation histogram) bezeichnet wird. Ähnlich wie bei den SIFT- Deskriptoren werden Bilddeskriptoren erzeugt, und dabei eine größere Anzahl von Raumbereichen für die Ermittlung von Histogrammen verwendet (siehe [2]).

Ein anderes Verfahren wird von M. Saquib Sarfraz und Olaf Hellwich beschrieben, das als "LESH" (local energy based shape histogram) bezeichnet wird (siehe [3]).

Die EP 1 850 270 A1 (siehe [4]) beschreibt ein Verfahren und eine Vorrichtung zum Auswerten von Bildern, bei denen skalierungsinvariante und rotationsinvariante Bildmerkmale erzeugt werden.

Die Bildmerkmale der genannten Verfahren werden in hochdimensionalen Vektoren gespeichert (Dimension je nach Verfahren zwischen 64 und 128, bei SIFT 128), wobei pro Bild, je nach Extrahierverfahren, zwischen 100 und 2000 Bildmerkmale anfallen.

EP2138957 A2 offenbart eine Vorrichtung und ein Verfahren zum Auffinden von Bildern anhand von 2-dimensionalen visuellen Merkmalen ("Fingerprints"), nämlich SIFT-Merkmalen. Die Merkmale werden normiert.

Der Artikel "CORTINA: SEARCHING A 10 MILLION + IMAGES DATABASE" von ELISA D. GELASCA ET AL. offenbart das Auffinden von Bildern in Datenbanken, wobei verschiedene Merkmale (SIFT, "Edge Histogram Descriptor", "Homogenous Texture Descriptor") benutzt werden. Die Merkmale werden gruppiert ("Clustering"). Cortina ist auch aus der Diplomarbeit "Cortina: A System for Large-scale, Content-based Web Image Retrieval and the Semantics within" von T. QUACK bekannt.

Das Wiederfinden eines Anfragebildes in einer Bildersammlung wird in der Regel durchgeführt, indem man für jedes Bildmerkmal des Anfragebildes eine Ähnlichkeit dadurch erkennt, dass man mit einem geeigneten Abstandsmaß (z.B. euklidische Distanz oder Skalarprodukt) der normierten Merkmals-Vektoren mit dem geringsten Abstand erkennt. Das Bild einer Anfrage ist dementsprechend dem Bild in einer Bildersammlung am ähnlichsten, dessen Bildmerkmale die geringsten Abstände zum Bild der Anfrage haben. Dabei gibt es verschiedene Verfahren, die Abstände und die Zahl der gefundenen Bildmerkmale zueinander zu gewichten.

Die Bildmerkmale haben generell folgende Eigenschaften:

- Wenn das Anfragebild nicht bitweise identisch zum Bild der Bildersammlung ist, sind auch sehr ähnliche Bildmerkmale in der Regel nicht bitweise identisch zueinander.
- Aufgrund der hohen Dimensionalität lassen sich Bildmerkmale nicht sortieren
- Übereinstimmungen können nur über Varianten von Nearest-Neighbor-Algorithmen (siehe [5]) gefunden werden, z.B. in dem man sie in einer Baumstruktur anordnet.

Die Verwendung einer Baumstruktur bietet sich bei der Suche zwar an und der Aufwand steht im Verhältnis log(Bilderzahl). Aufgrund einer fehlenden Sortierordnung muss aber zunächst eine Gruppierung (Clustering) der Bildmerkmale durchgeführt worden, was bei großen Bildmengen sehr aufwändig ist. Bei später hinzukommenden Bildern muss das aufwändige Clustering wiederholt werden.

Bei der Suche muss wiederum pro Bildmerkmal in mehreren Tiefen der Baum durchlaufen werden. Der Baum muss etwa so viele Knoten haben, wie Bildmerkmale aus der Bildersammlung vorliegen. Z.B. bei 1000 Bildmerkmalen pro Bild und 10 Mio Bilder ergeben sich $10^{10}$ Knoten, was mit heutigem Stand der Technik nicht im Hauptspeicher des Rechners gehalten werden kann. Zugriffe auf Massenspeicher verlangsamen die Suche aber erheblich, da für jeden Knoten ein einzelner Massenspeicherzugriff nötig ist, Bei 1000 Bildmerkmalen im Anfragebild, einer Baumtiefe von 10 und 5ms für einen Plattenzugriff ergibt sich eine Suchzeit von 50s.

Da der Baumansatz im Wirkbetrieb relativ aufwändig ist, konzentrieren sich diverse Entwicklungen mit der Lösung von Teilproblemen, z.B. Verteilung des Baumes auf mehrere Rechner oder Einsatz eines Hashing-Verfahrens, das in der Lage ist, mit Ähnlichkeiten statt mit Identitäten zu arbeiten (siehe [6]).

Aufgrund der fehlenden Identität und Sortierbarkeit ist es aber nicht möglich, die Bildmerkmale in Datenbank-Standard-Produkten, wie etwa gängige SQL-Datenbanken, zu speichern und wiederauffindbar zu machen.

Die Suche nach dem jeweils ähnlichsten Bildmerkmal erfordert einen zusätzlichen Mechanismus zur Zurückweisung von Bildern, die nicht in der Bildersammlung identifizierbar sind (False Positive Rejection): es wird sich zu jedem Bild ein Bild finden, das die höchste Ähnlichkeit zum Anfragebild hat, gemessen an der Ähnlichkeit seiner Bildmerkmale. Das führt aber zu völlig falschen Ergebnissen.

## Gegenstand der Erfindung

Der Erfindung liegt die Aufgabe zugrunde, ein Verfahren und eine Vorrichtung bereitzustellen, mit der eine Objekt-Datenbank erstellt werden kann, die eine einfache Speicherung und eine schnelle Suche von Objekten erlaubt.

Diese Aufgabe wird mit den Merkmalen der Patenansprüche gelöst.

Ein Aspekt der Erfindung bezieht sich auf ein Verfahren zum Erstellen einer Objekt-Datenbank. Dabei enthält diese Objekt-Datenbank Informationen, die von Objekten wie Bilder abgeleitet worden sind. Die Objekte oder beispielsweise Bilder können dabei von einem anderen System, im Folgenden als Metadaten-Service-System bezeichnet, gespeichert sein. Jedes Objekt wird dabei über eine Objekt-ID eindeutig beschrieben, wobei die Objekt-ID bei der Speicherung der abgeleiteten Informationen in der Objekt-Datenbank verwendet wird.

Für das erfindungsgemäße Verfahren werden mindestens ein Merkmals-Vektor, der aus einem Objekt extrahiert worden ist, und eine zugehörige Objekt-ID für eine Vielzahl von Objekten bereitgestellt. Die Merkmals-Vektoren sind vorzugsweise normiert und weisen eine Länge von 1 auf. Die Merkmals-Vektoren werden bearbeitet, indem mindestens eine Kennung aus jedem der Merkmals-Vektoren extrahiert wird. Diese Kennung kann auch als Fingerprint bezeichnet werden. Gespeichert werden die extrahierten Kennungen zusammen mit der zugehörigen Objekt-ID für jedes Objekt in einer ersten Datenbank. Gegebenenfalls können zusätzlich auch die Merkmals-Vektoren für jedes Objekt in der ersten Datenbank gespeichert werden. Diese können über die Kennungen wieder gefunden werden und ggf. weiterverwendet werden.

Gemäß einem weiteren Aspekt der Erfindung wird ermittelt, wie oft jede Kennung für verschiedene Objekte in der ersten Datenbank vorhanden ist. Diese ermittelte Anzahl wird zu jeder Kennung in der ersten Datenbank gespeichert. Weiterhin ist eine zweite Datenbank vorgesehen, in die die Kennungen überführt und gespeichert werden, die in der ersten Datenbank nur einmal für ein bestimmtes Objekt vorhanden sind. Diese eindeutigen Kennungen werden mit der zugehörigen Objekt-ID in der zweiten Datenbank gespeichert und bleiben gleichzeitig auch in der ersten Datenbank gespeichert.

Gemäß einem weiteren Aspekt der Erfindung werden n-dimensionale Merkmals-Vektoren verwendet, wobei n die Anzahl der Vektorkomponenten ist. Jede Vektorkomponente hat vorzugsweise mehr als 1 Bit. In einem Beispiel weist jeder Merkmals-Vektor 128 Vektorkomponenten auf, von denen jede Vektorkomponente 8 Bit aufweist. Beim Extrahieren einer Kennung aus einem Merkmals-Vektor wird dabei vorzugsweise die Anzahl von Bits je Vektorkomponente verringert und zwar auf bevorzugt 1 Bit.

Gemäß einem Aspekt der Erfindung wird beim Extrahieren der Kennung aus einem Merkmals-Vektor wie folgt vorgegangen. Zunächst werden alle n-Stellen einer Kennung mit dem Wert 1 initialisiert. Als nächstes wird der Wert jeder Vektorkomponente des n-dimensionalen Merkmals-Vektors mit einem ersten Schwellwert S1 verglichen. Ist der Wert einer Vektorkomponente kleiner als der erste Schwellwert S1, wird der Inhalt der entsprechenden i-ten Stelle der Kennung auf den Wert 0 gesetzt. Vorzugsweise wird als erster Schwellwert S1 der quadratische Mittelwert der Werte aller Vektorkomponenten verwendet und dabei vorzugsweise nach folgender Formel berechnet:

$$S1 = \frac{1}{\sqrt{n}}$$

In einem weiteren Schritt wird ermittelt, wie viele Stellen k der Kennung in dem vorangegangenen Verfahrensschritt auf null gesetzt worden sind. Weiterhin wird die Summe der Quadrate der Werte der Vektorkomponenten berechnet, deren entsprechende Stelle in dem vorangegangenen Schritt auf den Wert 0 gesetzt worden sind. Weiterhin werden die Werte der Vektorkomponenten mit einem zweiten Schwellwert S2 verglichen. Wenn der Wert der i-ten Vektorkomponente kleiner als der zweite Schwellwert S2 ist, wird die entsprechenden i-te Stelle in der Kennung auf den Wert 0 gesetzt. Der zweite Schwellwert S2 ermittelt sich vorzugsweise nach folgender Formel:

$$S2 = \frac{(1-r)}{\sqrt{(n-k)}}$$

Hierbei ist k die Anzahl der Stellen der Kennung, die im vorangegangenen Schritt auf 0 gesetzt worden sind, und r die Summe der Quadrate der Werte der zugehörigen Vektorkomponenten im Ausgangsvektor.

Gemäß einem weiteren Aspekt der Erfindung wird der vorangegangene Schritt wiederholt, bis keine weiteren Stellen der Keimung auf 0 gesetzt werden.

Gemäß einem Aspekt der Erfindung wird mittels der so gewonnenen ersten Kennung, die zu einem Merkmals-Vektor gehört, eine oder mehrere weitere Kennungen erzeugt. Dabei wird die erste Kennung kopiert, und an mindestens einer Stelle der kopierten Kennung wird der Wert geändert von beispielsweise 1 auf 0. Dabei werden vorzugsweise die Stellen der kopierten Kennung geändert, bei der der Wert der entsprechenden i-ten Vektorkomponente im Merkmals-Vektor in der Nähe des ersten Schwellwerts S1 liegt. Vorzugsweise werden die Stellen auf 0 gesetzt, bei der der Wert der Vektorkomponente kleiner ist als der zuletzt berechnete Schwellwert S2 plus eine erste Abweichung A1 oder es werden die Stellen auf 1 gesetzt, deren Vektorkomponente größer oder gleich ist als der zuletzt berechnete Schwellwert S2 minus eine erste Abweichung A1. Die so gewonnene zweite Kennung wird mit der zugehörigen Objekt-ID in der ersten Datenbank gespeichert. Sofern diese Kennung noch nicht in der zweiten Datenbank vorhanden ist, wird diese Kennung als eindeutige Kennung in der zweiten Datenbank gespeichert. Gemäß einem weiteren Aspekt der Erfindung können die vorangegangenen Schritte wiederholt werden, wobei hier der Vergleich erfolgt mit dem Schwellwert S1 plus eine zweite Abweichung A2. Diese zweite Abweichung A2 ist größer als die erste Abweichung A1.

Gemäß einem anderen Aspekt der Erfindung wird ein zuvor bereitgestelltes Objekt wieder gelöscht und damit die Objekt-Datenbank bereinigt. Anhand der entsprechenden Objekt-ID wird die entsprechende Kennung bzw. die mehreren Kennungen, die zu dem gelöschten Objekt gehören, in der ersten Datenbank gelöscht. Sofern die zugehörigen Merkmals-Vektoren gespeichert worden sind, werden auch diese in der ersten Datenbank gelöscht. Als nächstes wird die Anzahl für die jeweils gelöschte Kennung ermittelt, in der Regel um 1 verringert. Mit anderen Worten wird die Anzahl ermittelt, wie oft die entsprechende Kennung für verschiedene Objekte noch in der ersten Datenbank vorhanden ist. Für den Fall, dass die Anzahl dieser Kennung gleich 0 ist, wird diese Kennung in der zweiten Datenbank gelöscht. Andererseits wird für den Fall, dass die Anzahl gleich 1 wird, diese Kennung als eindeutige Kennung mit der zugehörigen Objekt-ID in der zweiten Datenbank gespeichert.

Gemäß einem besonderen Aspekt der Erfindung bei dem Merkmals-Vektoren für ein identisches oder ein gleiches Objekt erneut bereitgestellt werden, werden folgende Schritte durchgeführt. Bevor die Kennungen eines Objektes ABC in die Datenbank eingefügt werden, werden die Kennungen in der zweiten Datenbank angefragt. Ist eine größere Menge, z.B. mehr als 50% aller Kennungen des Objektes ABC dort vorhanden und sind sie alle dem selben Objekt XXX zugeordnet, geht man folgendermaßen vor:

Man definiert eine neue Objekt-Id GGG, die sich von normalen Objekt-Ids unterscheidet (z.B. negative Werte verwendet oder ein extra Flag in der Datenbank aufweist), ändert in der ersten und zweiten Datenbank alle Objekt-Ids der betreffenden Kennungen auf GGG, und führt eine weitere Tabelle, in der steht

GGG -> ABC
GGG -> XXX

GGG ist damit eine Kennungsgruppe oder eine Schnittmengen-Objekt-ID.

Wird ein weiteres (teil-)identisches Objekt EFG eingefügt, wird die 50%-Grenze vorzugsweise unter Auflösung von GGG überprüft:

Sind 50% der Kennungen in GGG, dann wird in die Gruppentabelle zusätzlich GGG -> EGF eingetragen und diese Kennungen nicht weiter beachtet. Für den Fall, dass beispielsweise nur 40% der Kennungen von EFG in GGG sind, wird überprüft, ob ABC oder XXX mehr als 10% direkt aufbringen. Wenn dann jeweils in der Summe über 50% der Kennungen von EGF vorhanden sind, z.B. 10% aus ABC, werden diese 10% aus ABC der Gruppe GGG zugeschlagen und GGG -> EFG wird ebenfalls in die Gruppentabelle aufgenommen.

Mit diesem Ansatz werden vorzugsweise nur größere Überschneidungsmengen gesondert behandelt, so dass das gewollte Löschen der mehrfachen Kennungen mit wenig Aussagekraft nicht beeinträchtigt wird. Wenn ein Objekt LLL gelöscht werden soll, werden alle Einträge in der Gruppentabelle, die rechts LLL enthalten, gelöscht. Außerdem werden alle Einträge aus der zweiten Datenbank gelöscht, die auf LLL zeigen. Weiterhin werden alle Einträge aus der ersten Datenbank gelöscht, die auf LLL zeigen, der Zähler nachgeführt, und wenn ein Zähler dabei von 2 auf 1 geht, der entsprechende Eintrag dieser Kennung wieder in die zweite Datenbank eintragen.

Gemäß einem zusätzlichen Aspekt der Erfindung wird ein Verfahren zum Auffinden von Objekten bereitgestellt, bei dem die nach dem zuvor beschriebenen Verfahren erstellte erste und zweite Datenbank verwendet wird. Es wird ein Anfrage-Objekt bereitgestellt, das ein Anfrage-Bild sein kann. Es wird mindestens ein Merkmals-Vektor aus dem Anfrage-Objekt extrahiert. Aus jedem extrahierten Merkmals-Vektor wird wiederum mindestens eine Kennung extrahiert. Diese mindestens eine extrahierte Kennung für das Anfrage-Objekt wird mit denen in der zweiten Datenbank gespeicherten eindeutigen Kennungen verglichen. Stimmt mindestens eine eindeutige Kennung, die in der zweiten Datenbank gespeichert ist, mit einer Kennung des Anfrage-Objekts überein, wird die entsprechende Objekt-ID, die zu der Kennung in der zweiten Datenbank gespeichert ist, ausgegeben. Alternativ werden Objekt-IDs nur dann ausgegeben, wenn mindestens zwei eindeutige Kennungen, die in der zweiten Datenbank gespeichert sind, mit den jeweils entsprechenden Kennungen des Anfrageobjekts übereinstimmen. Als weitere Alternative werden nur die Objekt-IDs ausgegeben, bei denen mindestens drei eindeutige Kennungen, die in der zweiten Datenbank gespeichert sind, mit den jeweils entsprechenden Kennungen des Anfrage-Objekts übereinstimmen. Hierbei können auch mehrere Objekt-IDs ausgegeben werden, bei denen die zuvor genannten Kriterien erfüllt sind. Ebenso können die zu einer Schnittmengen-Objekt-ID gehörenden Objekt-IDs ausgegeben werden.

Anschließend können diese Objekt-IDs an ein anderes System, z.B. ein Metadaten-Service-System gesendet werden, die das zu den Objekt-IDs gehörenden Objekte und/oder weitere Informationen über die jeweiligen Objekte für einen Nutzer ausgibt.

Unabhängig von der zuvor beschriebenen Vorgehensweise können Kennungen, die aus einem Merkmals-Vektor eines Anfrage-Objekts extrahiert worden sind, auch mit Kennungen verglichen werden, die in der ersten Datenbank gespeichert sind.

Gemäß einem Aspekt der Erfindung wird das Anfrage-Objekt mit einer Kamera aufgenommen und die Bilddaten in elektronischer Form gespeichert und weiterverarbeitet. Diese Bilddaten werden in der zuvor beschriebenen Weise zur Erstellung einer Bildmerkmal-Datenbank verwendet und zur Suche eines Anfrage-Bildes in der Bildmerkmal-Datenbank genutzt.

Gemäß einem weiteren Aspekt der Erfindung wird für die Erstellung der Bildmerkmal-Datenbank jedes Bild in mindestens einer weiteren Drehposition erfasst. Vorzugsweise wird dazu das Bild gegenüber der Ausgangslage um 30° und 60° gedreht, wobei andere Winkel möglich sind. Für jedes weitere so aufgenommene Bild werden die Schritte zum Extrahieren von Merkmals-Vektoren und Extrahieren von Kennungen durchgeführt.

Gemäß einem anderen Aspekt der Erfindung wird das Anfrage-Bild in mindestens einer weiteren Drehposition erfasst. Vorzugsweise wird das Anfrage-Bild gegenüber der Ausgangslage um 45° gedreht, wobei andere Winkel insbesondere der Winkel 30° und 60° gewählt werden können. Für das Anfrage-Bild in der weiteren Drehposition werden die Merkmals-Vektoren und die Kennungen des Anfrage-Bilds erfasst.

Gemäß einem alternativen Aspekt der Erfindung wird eine Vorrichtung bereitgestellt zum Erstellen einer Objekt-Datenbank. Diese Vorrichtung erhält mindestens ein Merkmals-Vektor, der aus einem Objekte extrahiert worden ist, und eine zugehörige Objekt-ID für eine Vielzahl von Objekten beispielsweise von einem anderen System, wie ein Metadaten-Service-System. Ein Merkmals-Vektor-Extraktor extrahiert mindestens ein Merkmals-Vektor aus jedem der Objekte. Vorzugsweise werden norminierte Merkmals-Vektoren von dem Extraktor bereitgestellt, die eine Länge von 1 aufweisen.

Ein Kennungs-Extraktor erhält die Merkmals-Vektoren zusammen mit der zugehörigen Objekt-ID. Dieser Kennungs-Extraktor extrahiert mindestens eine Kennung aus jedem der Merkmals-Vektoren. Die Vorrichtung weist einen ersten Speicher auf zum Speichern der Kennungen zusammen mit den zugehörigen Objekt-IDs für jedes Objekt in einer ersten Datenbank. In diesem ersten Speicher können zusätzlich die Merkmals-Vektoren für jedes Objekt in der ersten Datenbank gespeichert werden.

Gemäß einem weiteren Aspekt der Erfindung weist die Vorrichtung einen Zähler auf, mit dem die Anzahl ermittelt wird, wie oft jede Kennung für verschiedene Objekte in der ersten Datenbank vorhanden ist. Die Anzahl jeder Kennung wird in der ersten Datenbank gespeichert. Weiterhin weist die Vorrichtung ein Filter auf, mit dem geprüft wird, ob die Anzahl einer Kennung in der ersten Datenbank gleich 1 ist oder größer als 1 ist. Abhängig hiervon wird für den Fall, dass die Anzahl gleich 1 ist, die Kennung in einen zweiten Speicher übertragen, in der diese als eindeutige Kennung in einer zweiten Datenbank gespeichert wird. Für den Fall, dass die Anzahl einer Kennung größer als 1 ist, wird die gegebenenfalls in der zweiten Datenbank gespeicherte Kennung mit der zugehörigen Objekt-ID gelöscht.

Ein weiterer Aspekt der Erfindung betrifft eine Vorrichtung zum Auffinden von Objekten mittels der nach einem der vorstehenden Ansprüche erstellten zweiten Datenbank, wobei mindestens ein Merkmals-Vektor, der aus einem Anfrage-Objekt extrahiert worden ist, von einem getrennten System bereitgestellt wird, mit einem Kennungs-Extraktor zum Extrahieren mindestens einer Kennung aus jedem Merkmals-Vektor. Ein Bildfinder dient zum Prüfen, ob eine extrahierten Kennung für das Anfrage-Objekt mit den in der zweiten Datenbank gespeicherten eindeutigen Kennungen übereinstimmt, und zum Ausgeben mindestens einer Objekt-ID, die in der zweiten Datenbank gespeichert ist, bei der mindestens eine eindeutige Kennung, vorzugsweise mindestens zwei eindeutige Kennungen, besonders bevorzugt mindestens drei eindeutige Kennungen mit jeweils entsprechenden Kennungen des Anfrage-Objekts übereinstimmen.

Gemäß einem weiteren Aspekt der Erfindung ist die Vorrichtung und die vorhandenen Einrichtungen so konfiguriert, um die weiteren Aspekte des beschriebenen Verfahrens durchzuführen.

Die Aspekte der vorliegenden Erfindung haben eine oder mehrere der folgenden Eigenschaften:

  ▪ Die einfache Zusammenführung von Merkmalen (Features) in sehr kleine Gruppen, die ähnlichen Merkmale die selbe Gruppen-Kennung (Fingerprint) zuweist, ist möglich; Merkmale, die der selben Kennung zugewiesen sind, haben eine hohe Ähnlichkeit; trotz dieser kleinen Gruppen enthalten Anfrage-Bilder, die durch Fotografieren des Original-Objektes gewonnen wurden, Kennung des Original-Objektes.
  ▪ Kennungen lassen sich zur Speicherung sortieren.
  ▪ Kennungen können in konventionellen relationalen Datenbanken, wie SQL-Datenbanken gespeichert und wiedergefunden werden.
  ▪ Es können die Kennungen ermittelt werden, die nur einem Bild zugeordnet (unique) sind.
  ▪ Mittels Suche auf den eindeutigen Kennungen (unique-Fingerprints) wird die Trefferzahl derart reduziert, dass keine False-Positive-Rejection nötig ist.
  ▪ Es ist ein geringer Speicherbedarf erforderlich und die Datenversorgung erfolgt direkt aus der Datenbank.
  ▪ Es wird ein schnelles Bereitstellen des ersten plausiblen Suchergebnisses erreicht.

Das Verfahren gemäß der Erfindung ist überall dort anwendbar, wo hochdimensionale, normierte Daten anfallen, z.B. Kombinationen von Messwerten, die in großen Mengen anfallen und später schnell suchbar sein müssen, etwa um Adhoc kritische Situationen wiederzuerkennen.

Die Erfindung wird nachstehend anhand von Beispielen und der Zeichnungen näher erläutert. Es zeigen:

  Fig. 1 ein schematisches Blockschaltbild gemäß einer Ausführungsform der Erfindung zum Erstellen einer Bildmerkmal-Datenbank, und
  Fig. 2 ein schematisches Blockschaltbild einer Ausführungsform gemäß der vorliegenden Erfindung zum Abfragen einer Bildmerkmal-Datenbank.

**Detaillierte Beschreibung von Ausführungsformen der Erfindung**

Nachfolgend wird anhand von Beispielen das Erstellen einer Bildmerkmal-Datenbank und das Befragen der Bildmerkmal-Datenbank erläutert.

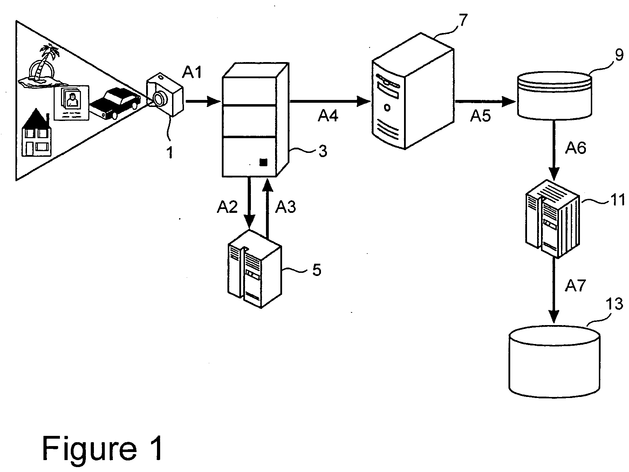

Fig. 1 zeigt ein schematisches Blockschaltbild eines Systems zum Erstellen der Bildmerkmal-Datenbank, in dem die vorliegende Erfindung eingesetzt wird. Im einzelnen zeigt Fig. 1 eine Kamera 1, die beispielhaft zeigt, dass reale Objekte wie ein PKW, ein Haus, eine Insel oder Personen aufgenommen werden können. Die Bilder der Kamera 1 werden als Objekte an ein Metadaten-Service-System 3 weitergeleitet. Dieses Metadaten-Service-System kann aus einem Rechner mit Speichereinrichtungen oder verteilten Rechnern mit verteilten Speichereinrichtungen bestehen. Das Metadaten-Service-System ist mit einem Merkmals-Vektor-Extraktor 5 verbunden. Dieser Merkmals-Vektor-Extraktor erhält in diesem Fall Bilder als Objekte und liefert BildMerkmals-Vektoren als Ergebnis zurück an das Metadaten-Service-System 3. Das Metadaten-Service-System 3 liefert die BildMerkmals-Vektoren zusammen mit Bild-IDs an einen Kennungs-Extraktor 7. Die von dem Kennungs-Extraktor 7 erzeugten Kennungen werden mit den zugehörigen Bild-IDs an einen ersten Speicher 9 weitergeleitet. In diesem Beispiel ist weiterhin ein Filter 11 vorgesehen, das zwischen dem ersten Speicher 9 und einem zweiten Speicher 13 angeordnet ist. In dem ersten Speicher 9 werden Kennungen zusammen mit den zugehörigen Bild-IDs in einer ersten Datenbank gespeichert. Mittels des Filters 11 werden Kennungen an einen zweiten Speicher 13 weitergegeben, wenn diese aufgrund eines Überprüfungsverfahrens als eindeutig erkannt werden. In dem zweiten Speicher 13 sind diese eindeutigen Kennungen zusammen mit den zugehörigen Bild-IDs als eindeutige Kennungen gespeichert.

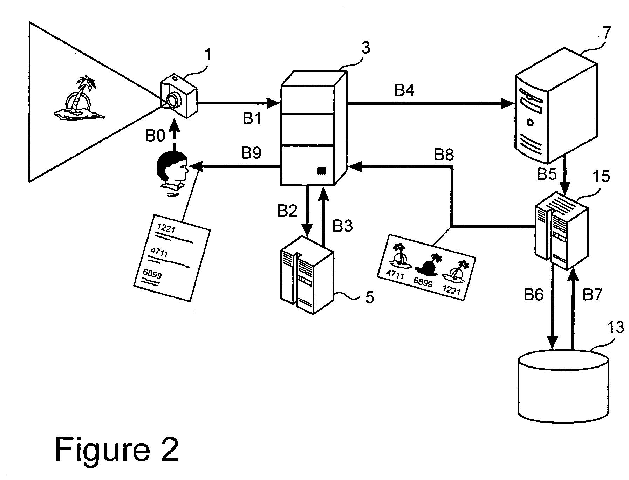

Fig. 2 zeigt ein schematisches Blockschaltbild eines Systems zum Befragen der Bildmerkmal-Datenbank, in dem die vorliegende Erfindung eingesetzt wird. Der Aufbau ist vergleichbar mit dem von Fig. 1. In diesem Beispiel ist anstelle des ersten Speichers 9 und des Filters 11 ein Bildfinder 15 zwischen dem Kennungs-Extraktor 7 und dem zweiten Speicher 13 angeordnet. Der Bildfinder gibt gefundene Objekt-IDs an das Metadaten-Service-System 3 aus. Das wiederum gibt Informationen an einen Nutzer aus, die mit dem Abfrage-Bild in Beziehung stehen.

Die Ausführungsform der Erfindung ist somit integriert in ein System, das die Verwaltung der Metadaten der Bilder übernimmt und jedem Quellbild zumindest eine eindeutige Identifikation (Id) zuordnet, die dem Bild später wieder zugeordnet werden kann.

Der Merkmals-Vektor-Extraktor 5 erzeugt und liefert die oben beschriebenen Bildmerkmals-Vektoren mit den beschriebenen Eigenschaften. Vorzugsweise wird das Verfahren SIFT [1] eingesetzt. Der Kennungs-Extraktor 7 erstellt aus einem Merkmals-Vektor ein oder mehrere Kennungen (Fingerprints).

Der erste Speicher 9 enthält eine erste Datenbank, z.B. eine SQL-Datenbank, die die Zuordnung der Kennungen zu den Bild-Ids ermöglicht. Es kann mit relationalen Datenbanken beispielsweise mit SQLite oder MySQL gearbeitet werden.

Das Filter 11 erstellt Zählungen, wie oft welche Kennungen in wie vielen verschiedenen Bildern vorkommen und überführt diejenigen, die nur einmal vorkommen, in den zweiten Speicher 13 mit der zweiten Datenbank. Bei hinzukommenden Doppelungen von Kennungen werden diese Kennungen wieder aus der zweiten Datenbank gelöscht.

In der zweiten Datenbank im zweiten Speicher 13 werden ausschließlich die Kennungen gespeichert, die aus genau einem Bild stammen. Bei diesem Ausführungsbeispiel wird die zweite Datenbank nicht in die erste Datenbank integriert. Dies ermöglicht die Zugriffsgeschwindigkeit während der Abfrage zu erhöhen. Außerdem kann diese Datenbank bei hoher Last auf mehrere Rechner verteilt werden.

Der Bildfinder 15 sucht die Kennungen heraus, die in der zweiten Datenbank vorliegen, und liefert die besten Treffer an das Metadaten-Service-System 3.

Im folgenden wird das Verfahren zum Erstellen der Bildmerkmal-Datenbank anhand von Figur 1 beschrieben, wobei auf die mit A1 - A7 bezeichneten Pfeile Bezug genommen wird. Bei den Schritten **A1-A4** werden von den Bildern Bildmerkmale extrahiert, im vorliegenden Beispiel 128-dimensionale Merkmals-Vektoren (Features) des Verfahrens SIFT. Von **A4 nach A5** werden für jedes Bild alle Merkmals-Vektoren (Features) dem Kennungs-Extraktor 7 übergeben. Dieser extrahiert aus jedem Merkmals-Vektor ein oder mehrere Kennungen (Fingerprints). Bei der Extrahierung der Kennungen wird folgende Überlegung zugrunde gelegt:

Die Vektoren sind normiert, haben also eine Länge von 1. Das Abstandsmaß ist das Skalarprodukt: es ist bei identischen Vektoren 1 (bestmögliches Ergebnis), bei orthogonalen Vektoren 0 (schlechteste mögliche Ergebnis). Ein hohes Skalarprodukt zwischen zwei Bildmerkmals-Vektoren lässt auf eine hohe Ähnlichkeit zwischen den Bildmerkmalen schließen. Da die Vektoren normiert sind, bedeutet es, dass, wenn Werte von einzelnen Elementen des Vektors sehr klein sind, andere entsprechend größer sein müssen. Für ein gutes Skalarprodukt sind dabei vor allem die großen Werte relevant. Bei der Bildung des Skalarprodukts werden die Produkte des jeweiligen Elementes des einen Vektors mit dem korrespondierenden des anderen gebildet. Treffen dabei große Werte auf große Werte, so ist das Skalarprodukt hoch, treffen die großen Werte des einen Vektors auf kleine Werte des anderen Vektors, kann niemals ein Skalarprodukt nahe 1 entstehen.

Der Merkmals-Vektor-Extraktor findet daher für jeden Merkmals-Vektor eine geeignete Schwelle, die große von kleinen Werten unterscheidet, ordnet jedem großen Wert eine 1 zu, und jedem kleinen Wert eine 0.

Dabei wird in diesem Beispiel wie folgt vorgegangen wobei von einem 128-dimensionalen Merkmals-Vektor ausgegangen wird:

1. Alle 128 Ergebniswerte werden zunächst auf 1 gesetzt.
2. Allen Vektorkomponenten, deren Wert kleiner ist als $\frac{1}{\sqrt{128}}$ wird eine 0 als Ergebniswert zugewiesen. Die Zahl der dabei zugewiesenen Nullen sei $n$, die Summe der Quadrate der Werte, deren Ergebniswert auf Null gesetzt wurde, sei $r$.
3. Allen Werten, deren Wert kleiner ist als

$$\frac{(1-r)}{\sqrt{(128-n)}}$$

wird ebenfalls der Ergebniswert 0 zugewiesen, die Gesamtzahl aller Nullen im Ergebnis sei wieder n, die Summe der Quadrate der zugehörigen Werte im Ausgangsvektor sei wieder r.
4. Schritt 3 wird so lange wiederholt, bis es zu keinen Veränderungen im Ergebnismuster kommt. Vorzugsweise wird der Schritt 3 fünfmal wiederholt.

So entsteht als Kennung eine Zahl, die so viele Bits hat, wie der Merkmals-Vektor Dimensionen. Dies bedeutet eine deutliche Datenreduktion gegenüber den ursprünglichen Feature-Daten.

Das beschriebene Verfahren ist für die Werte ungenau, die nahe am Schwellwert sind. Geringfügige optische Variationen im Bild können zu einer anderen Zuordnung des zugehörigen Bits führen.

Deswegen bietet der Merkmals-Vektor-Extraktor die Möglichkeit, die Zahl der errechneten Kennungen zu erhöhen, indem die Bits, deren Werte im Ausgangsvektor dem Grenzwert $\frac{(1-r)}{\sqrt{(128-n)}}$ am nächsten sind, variiert werden. Insbesondere bei Bildern, zu denen der Merkmals-Vektor-Extraktor eine kleine Zahl von Bildmerkmalen liefert, bietet sich dieses Vorgehen an.

Der dabei entstehende Mehraufwand in der Suche auf einer größeren Datenbasis wird durch die nachfolgende Unique-Filterung nach eindeutigen Kennungen abgefangen.

Bei den Schritten **A5 nach A7** werden die extrahierten Kennungen in einer Datenbank, im Beispiel SQLite und MySQL, gespeichert. Dabei wird die Zuordnung Kennung zu Bild-Id gespeichert, optional auch schon ein Zähler, welche Kennung in wie vielen Bildern vorkommt.

Es hat sich herausgestellt, dass es bei einer hohen Bilderzahl und der resultierenden 1000-fach höheren Zahl von Kennungen nicht so günstig ist, die gespeicherten Werte gleichzeitig such- und zählbar auf einem Massenspeicher vorzuhalten, während man schnell große Datenmengen einfügten möchte.

Hier bietet die SQL-Datenbank den Vorteil, die Daten nicht-suchbar einzufügen, und danach einen Index zu erstellen, mit dem wiederum Zählungen erstellt werden können.

Bei den Schritten **A7 nach A8** übernimmt der Unique-Filter 11 die Zählung der Bilder, die auf eine Kennung kommen, und überträgt alle Kennungen, die nur in einem Bild vorkommen, in die zweite Datenbank im zweiten Speicher 13.

Der Unique-Filter 11 führt ebenfalls notwendig werdende Löschungen in der zweiten Datenbank nach, falls Kennungen nach Einfügungen von Bildern nicht mehr einzigartig sind, oder überträgt Kennungen wieder von der ersten Datenbank an die zweite Datenbank, falls Kennungen nach Löschungen von Bildern wieder einzigartig werden.

Im folgenden wird das Verfahren zur Anfrage an die Bildmerkmal-Datenbank anhand von Figur 2 beschrieben, wobei auf die mit B1 - B9 bezeichneten Pfeile Bezug genommen wird. Zunächst entsteht ein Foto, z.B. durch fotografieren durch einen Anwender (**B0**) In den Schritten **B1-B4** werden aus den Bildern Bildmerkmale extrahiert, im Beispiel 128-dimensionale Bild-Merkmals-Vektoren des Verfahrens SIFT.

Von **B4 nach B5** werden alle Bildmerkmals-Vektoren dem Kennungs-Extraktor übergeben. Dieser extrahiert aus jedem Bildmerkmals-Vektor ein oder mehrere Kennungen wie in A4-A5 bei der Datenbankerstellung. Der wesentliche Unterschied ist, dass es sich nur um ein Bild handelt, und diesem keine Bild-Id zugeordnet sein kann. Bei einer Anfrage mit unterdurchschnittlich kleiner Zahl von Bildmerkmals-Vektoren sollte die Zahl der Kennungen durch Variation kritischer Bits erhöht werden, die an der Grenze zu einem gewählten Schwellwert liegen.

In **B5 nach B8** sucht der Bildfinder 15 in der zweiten Datenbank alle dort vorliegenden Kennungen, die in der Menge der Anfrage-Kennungen vorkommen. Der zeitliche Hauptaufwand dabei ergibt sich nicht durch die Suche in der Datenbank selbst, sondern bei der Bereitstellung der Ergebnisse, da für jeden Datensatz ein Zugriff auf den Massenspeicher (bei einer Festplatte ca. 5ms) nötig ist.

Erfindungsgemäß sind aber die bereitstellbaren Ergebnisse durch die Unique-Filterung soweit auf aussagekräftige Treffer verringert, dass auch die Vermehrung der Kennungen (A4→A5, B4→B5) die Antwortzeit nur weit unterdurchschnittlich erhöht.

Der Bildfinder zählt während der Anfrage an die zweite Datenbank, welche Bild-Id wieviele der Anfrage-Kennungen als Treffer hat. Es hat sich herausgestellt, dass bereits 2-3 Treffer-Kennungen ein Bild als robustes Ergebnis sicher identifizieren, während ein Treffer unter Umständen zu viele Ergebnisse liefert.

Mit diesem Kriterium hat der Bild-Finder die Möglichkeit, die Anfrage abzubrechen, sobald ein Bild die nötige Trefferzahl hat. Mit dem Verzicht auf weitere Treffer kommt man so auf sehr schnelle Suchergebnisse, während andere Verfahren, die nur einen relativen Vergleich von Trefferzählungen machen, alle Ergebnisse berechnen müssen, bevor eine Entscheidung möglich ist. Außerdem ist bei diesen bekannten Verfahren eine Abgrenzung von sinnvollen Treffern und nicht sinnvollen (False Positives) schwer möglich.

Beim Schritt **B8** erhält das Metadaten-Service-System 3 von dem Bildfinder 15 eine Liste von Bild-Ids, die als Suchergebnis in Frage kommen, in diesem Beispiel Bild-Ids (4711, 6899 und 1221) zu drei Bildern, die jeweils eine Insel zeigen. Beim Schritt **B9** reichert das Metadaten-Service-System 3 diese Bild-Ids mit seinen Metadaten an und stellt dem Benutzer den Service zur Verfügung. Beispielsweise können dem Benutzer die Bilder und/oder Informationen zu den Bildern ggf. mit den Bild-IDs zur Verfügung gestellt werden.

Die Erfindung wurde anhand von Beispielen näher erläutert, die aber geändert und modifiziert werden können, ohne vom Schutzbereich der Ansprüche abzuweichen, wobei der Schutzumfang der Erfindung von den Ansprüchen definiert ist. Insbesondere können die oben genannten Beispiele bzw. einzelnen Merkmale der Beispiele für sich allein verwendet werden oder miteinander kombiniert bzw. ausgetauscht werden.

### Literaturangaben:

[1] David G. Lowe (2000) Scale-invariant feature transform (US-Patent 6711293 (B1))) http://www. google.com/patents/about?id=clcSAAAAEBAJ&dq=6711293 http://en.wikipedia.org/wiki/Scale-invariant_feature_transform

[2] Krystian Mikolajczyk, Cordelia Schmid (2005): Gradient Location and Orientation Histogram http://lear.inrialpes. fr/pubs/2005/MS05/mikolajczyk_pami05.pdf http://en.wikipedia.org/wiki/GLOH

[3] M. Saquib Sarfraz and Olaf Hellwich (2008): Local Energy based Shape Histogram http://srv-43-200. bv.tu-berlin.de/publications/pdf/Sarfraz_0108.pdf http://en.wikipedia.org/wiki/LESH

[4] Herbert Bay, Tinne Tuytelaars, and Luc Van Gool (2006): Speeded Up Robust Features http://www. vision.ee.ethz.ch/~surf/eccv06.pdf http://depatisnet.dpma.de/DepatisNet/depatisnet?action=bibdat&docid=EP000001850 270A1 http://en.wikipedia.org/wiki/SURF

[5] Marius Muja, David Lowe (2009): Fast Approximate Nearest Neighbors with Automatic Algorithm Configuration www.cs.ubc.ca/~lowe/papers/09muja.pdf

[6] by Alexandr Andoni and Piotr Indyk (2008) Approximate Nearest Neighbor in High Dimensions http://www.mit.edu/~andoni/papers/CACM-article.ps

### Patentansprüche

1. Computerimplementiertes Verfahren zum Erstellen einer Objekt-Datenbank mit den Schritten:

a) Bereitstellen mindestens eines Merkmals-Vektors, der aus einem Objekt extrahiert worden ist, wobei das Objekt ein Bild ist, und einer zugehörigen Objekt-ID für eine Vielzahl von Objekten, wobei die Merkmals-Vektoren normiert sind und eine Länge von 1 aufweisen,

b) Extrahieren mindestens einer Kennung - "fingerprint" - aus jedem der Merkmals-Vektoren,

c) Speichern der mindestens einen Kennung zusammen mit der zugehörigen Objekt-ID für jedes Objekt in einer ersten Datenbank, und

d) Speichern der Merkmals-Vektoren für jedes Objekt in der ersten Datenbank, mit den weiteren Schritten:

Ermitteln der Anzahl, wie oft jede Kennung für verschiedene Objekte in der ersten Datenbank vorhanden ist,

Speichern der Anzahl jeder Kennung in der ersten Datenbank, und

für den Fall, dass die Anzahl einer Kennung in der ersten Datenbank gleich 1 ist, Speichern dieser eindeutigen Kennung mit der zugehörigen Objekt-ID in einer zweiten Datenbank, und

für den Fall, dass die Anzahl einer Kennung in der ersten Datenbank größer als 1 ist, Löschen dieser gegebenenfalls in der zweiten Datenbank gespeicherten Kennung mit der zugehörigen Objekt-ID aus der zweiten Datenbank.

2. Verfahren nach Anspruch 1, wobei jeder Merkmals-Vektor n-dimensional ist, wobei n die Anzahl der Vektorkomponenten ist und jede Vektorkomponente m Bit aufweist, wobei besonders bevorzugt n=128 und m=8 beträgt und wobei beim Extrahieren der Kennung aus einem Merkmals-Vektor die Anzahl von Bits je Vektorkomponente verringert wird, vorzugsweise auf ein Bit verringert wird.

3. Verfahren nach Anspruch 2, mit den Schritten:

Initialisieren von allen n-Stellen einer Kennung mit dem Wert 1,

Vergleichen des Werts jeder Vektorkomponente des n-dimensionalen Merkmals-Vektors mit einem ersten Schwellwert S1 und

Ändern des Inhalts der entsprechenden i-ten Stelle der Kennung auf den Wert 0, wenn der Wert der i-ten Vektorkomponente kleiner ist als der erste Schwellwert S1, wobei der erste Schwellwert S1 vorzugsweise der quadratische Mittelwert der Werte aller Vektorkomponenten ist und sich vorzugsweise nach folgender Formel berechnet:

$$S1 = \frac{1}{\sqrt{n}}$$

4. Verfahren nach Anspruch 3 mit den Schritten:

Ermitteln der Anzahl k von Stellen der Kennung, die auf 0 gesetzt worden sind,

Berechnen der Summe der Quadrate der Werte der Vektorkomponenten, deren entsprechende Stelle in der Kennung auf 0 gesetzt worden sind,

Vergleichen der Werte der Vektorkomponenten mit einem zweiten Schwellwert S2, wobei die entsprechende i-te Stelle in der Kennung auf 0 gesetzt wird, wenn der Wert der i-ten Vektorkomponente kleiner als der zweite Schwellwert S2 ist, wobei der zweite Schwellwert sich nach folgender Formel berechnet:

$$S2 = \frac{(1-r)}{\sqrt{(n-k)}}$$

wobei k die Anzahl der Stellen der Kennung ist, die auf 0 gesetzt worden sind, und r die Summe der Quadrate der Werte der zugehörigen Vektorkomponenten im Ausgangsvektor ist, und

Wiederholen der vorangegangenen Schritte, bis keine weiteren Stellen der Kennung auf 0 gesetzt werden.

5. Verfahren nach Anspruch 4, wobei eine gewonnene erste Kennung wie folgt weiter bearbeitet wird:

Kopieren der ersten Kennung,

Ändern eines Wertes mindestens einer Stelle der kopierten Kennung von 1 auf 0, wobei die mindestens eine i-te Stelle ausgewählt wird anhand des Wertes der entsprechenden i-ten Vektorkomponente im Merkmals-Vektor und wobei die Stelle/Stellen auf 0 gesetzt wird/werden, bei der der Wert der Vektorkomponente kleiner ist als der zuletzt berechnete Schwellwert S2 plus eine erste Abweichung A1 oder es werden die Stelle/Stellen auf 1 gesetzt, deren Vektorkomponente größer oder gleich ist als der zuletzt berechnete Schwellwert S2 minus eine erste Abweichung A1 und

Speichern der so gewonnenen zweiten Kennung mit der zugehörigen Objekt-ID in der ersten Datenbank und gegebenenfalls in der zweiten Datenbank, wenn diese Kennung eindeutig ist, und

Wiederholen der vorangegangenen Schritte mit einer zweiten Abweichung A2, die größer ist als die erste Abweichung A1.

**6.** Verfahren nach einem der vorstehenden Ansprüche, mit folgenden Schritten, wenn eines der bereitgestellten Objekte wieder gelöscht wird:

Löschen der zu dem gelöschten Objekt gehörenden mindestens einen Kennung und der gespeicherten Merkmals-Vektoren in der ersten Datenbank,

Ermitteln der Anzahl, wie oft die gelöschte Kennung in der ersten Datenbank noch vorhanden ist, und

für den Fall, dass die Anzahl dieser Kennung gleich 0 ist, Löschen dieser Kennung in der zweiten Datenbank und für den Fall, dass die Anzahl gleich 1 ist, Speichern dieser eindeutigen Kennung mit der zugehörigen Objekt-ID in der zweiten Datenbank.

**7.** Verfahren zum Auffinden von Objekten mittels der nach einem der vorstehenden Ansprüche erstellten ersten und zweiten Datenbank, mit den Schritten:

Bereitstellen mindestens eines Merkmals-Vektors, der aus einem Anfrage-Objekt extrahiert worden ist,

Extrahieren mindestens einer Kennung aus jedem Merkmals-Vektor,

Vergleichen der mindestens einen extrahierten Kennung für das Anfrage-Objekt mit den in der zweiten Datenbank gespeicherten eindeutigen Kennungen und

Ausgeben mindestens einer Objekt-ID, die in der zweiten Datenbank gespeichert ist, bei der mindestens eine eindeutige Kennung, vorzugsweise mindestens zwei eindeutige Kennungen, besonders bevorzugt mindestens drei eindeutige Kennungen mit jeweils entsprechenden Kennungen des Anfrage-Objekts übereinstimmen.

**8.** Verfahren nach einem der vorstehenden Ansprüche, wobei das Objekt mit einer Kamera aufgenommen worden ist und das Verfahren zur Erstellung einer Bildmerkmal-Datenbank verwendet wird und zur Suche eines Anfrage-Bildes in der Bildmerkmal-Datenbank dient.

**9.** Verfahren nach Anspruch 8, wobei jedes Bild bei der Erstellung der Bildmerkmal-Datenbank in mindestens einer weiteren Drehposition erfasst wird und dabei vorzugsweise das Bild um 30° und 60° gegenüber der Ausgangslage gedreht wird und jeweils die Schritte zum Extrahieren von Merkmals-Vektoren und Extrahieren von Kennungen wiederholt werden.

**10.** Verfahren nach Anspruch 8 oder 9, wobei das Anfrage-Bild in mindestens einer weiteren Drehposition erfasst wird, vorzugsweise bei einer Drehung von 45° gegenüber der Ausgangslage und dabei die Merkmals-Vektoren und die Kennungen des Anfrage-Bilds wiederholt erfasst werden.

**11.** Vorrichtung zum Erstellen einer Objekt-Datenbank, wobei mindestens ein Merkmals-Vektor, der aus einem Objekt extrahiert worden ist, wobei das Objekt ein Bild ist, und eine zugehörige Objekt-ID für eine Vielzahl von Objekten von einem getrennten System bereitgestellt werden, wobei die Merkmals-Vektoren normiert sind und eine Länge von 1 aufweisen, mit:

a) einem Kennungs-Extraktor zum Extrahieren mindestens einer Kennung aus jedem der Merkmals-Vektoren, und

b) einem ersten Speicher zum Speichern der mindestens einen Kennung zusammen mit der zugehörigen Objekt-ID für jedes Objekt in einer ersten Datenbank und zum Speichern der Merkmals-Vektoren für jedes Objekt in der ersten Datenbank,

ferner mit:

einem Zähler zum Ermitteln der Anzahl, wie oft jede Kennung für verschiedene Objekte in der ersten Datenbank vorhanden ist, wobei die Anzahl jeder Kennung in der ersten Datenbank gespeichert wird, und

einem Filter, das die Anzahl jeder der Kennungen prüft und

einem zweiten Speicher mit einer zweiten Datenbank,

wobei für den Fall, dass die Anzahl einer Kennung in der ersten Datenbank gleich 1 ist, diese eindeutige Kennung mit der zugehörigen Objekt-ID in der zweiten Datenbank gespeichert wird, und für den Fall, dass die Anzahl einer Kennung in der ersten Datenbank größer als 1 ist, diese gegebenenfalls in der zweiten Datenbank gespeicherte Kennung mit der zugehörigen Objekt-ID aus der zweiten Datenbank gelöscht wird.

**12.** Vorrichtung zum Auffinden von Objekten mittels der nach Anspruch 11 erstellten zweiten Datenbank wobei mindestens ein Merkmals-Vektor, der aus dem Anfrage-Objekt extrahiert worden ist von einem getrennten System bereitgestellt wird, mit:

einem Kennungs-Extraktor zum Extrahieren mindestens einer Kennung aus jedem Merkmals-Vektor, und

einem Bildfinder zum Prüfen, ob eine extrahierte Kennung für das Anfrage-Objekt mit den in der zweiten Datenbank gespeicherten eindeutigen Kennungen übereinstimmt, und zum Ausgeben mindestens einer Objekt-ID, die in der zweiten Datenbank gespeichert ist, bei der mindestens eine eindeutige Kennung, vorzugsweise mindestens zwei eindeutige Kennungen, besonders bevorzugt mindestens drei eindeutige Kennungen mit jeweils entsprechenden Kennungen des Anfrage-Objekts übereinstimmen.

13. Vorrichtung nach Anspruch 11 oder 12, wobei das Objekt mit einer Kamera aufgenommen worden ist und die Vorrichtung zum Erstellen einer Bildmerkmal-Datenbank verwendet wird und zur Suche eines Anfrage-Bildes in der Bildmerkmal-Datenbank dient.

**Claims**

1. A computer-implemented method for generating an object database comprising the steps of:

   (a) providing at least one feature vector extracted from an object, wherein the object is an image, and a corresponding object ID for a plurality of objects, wherein the feature vectors are standardised and have a length of 1,
   (b) extracting at least one identifier "fingerprint" from each of the feature vectors,
   (c) storing the at least one identifier together with the corresponding object ID for each object in a first database, and
   (d) storing the feature vectors for each object in the first database, comprising the further steps of:

      determining the number of times every identifier is present for various objects in the first database,
      storing the number of every identifier in the first database, and
      in case the number of an identifier in the first database is equal 1, storing this unique identifier with the corresponding object ID in a second database, and in case the number of an identifier in the first database is higher than 1, deleting the identifier possibly stored in the second database with the corresponding object ID from the second database.

2. The method according to claim 1, wherein every feature vector is n-dimensional, wherein n is the number of vector components and every vector component comprises m-bit, wherein particularly preferably n=128 and m=8, and wherein upon extraction of the identifier from a feature vector, the number of bits per vector component is reduced, preferably to one bit.

3. The method according to claim 2, comprising the steps of:

   initialising of all n-digits of an identifier with the value 1,
   comparing the value of each vector component of the n-dimensional feature vector with a first threshold value S1, and
   changing the content of the corresponding i-th digit of the identifier to the value 0 when the value of the i-th vector component is smaller than the first threshold value S1,
   wherein the first threshold value S1 is preferably the root mean square of the values of all vector components and is calculated according to the following formula:

$$S1 = \frac{1}{\sqrt{n}}$$

4. The method according to claim 3 comprising the following steps:

   determining the number k of digits of the identifier which were set at 0,
   calculating the sum of squares of the values of the vector components whose corresponding digit in the identifier was set at 0,
   comparing the values of the vector components with a second threshold value S2,
   wherein the corresponding i-th digit in the identifier is set at 0 when the value of the i-th vector component is smaller than the second threshold value S2, wherein the second threshold value is calculated according to the following formula:

$$S2 = \frac{(1-r)}{\sqrt{(n-k)}}$$

   wherein k is the number of digits in the identifier which were set at 0 and r is the sum of the squares of the values of the corresponding vector components in the output vector, and
   repeating the preceding steps until no further digits of the identifier are set at 0.

5. The method according to claim 4, wherein an obtained first identifier is further processed as follows:

   copying the first identifier,
   changing a value of at least one digit of the copied identifier from 1 to 0, wherein the at least i-th digit is selected by means of the value of the corresponding i-th vector component in the feature vector and wherein the digit/digits is/are set at 0, where the value of the vector component is smaller than the threshold value S2 last calculated plus a first deviation A1 or the digit/digits is/are set at 1 where the vector components are higher than or equal to the threshold value S2 last calculated minus a first deviation A1, and storing the thus obtained second identifier with the corresponding object ID in the first database and optionally in the second database when said identifier is unique, and

repeating the preceding steps with a second deviation A2 which is larger than the first deviation A1.

6. The method according to the any one of the preceding claims with the following steps when one of the provided objects is deleted again:

deleting the at least one identifier belonging to the deleted object and the stored feature vectors in the first database,
determining the number of times the deleted identifier is still present in the first database, and in case the number of said identifier is equal 0, deleting said identifier in the second database and in case the number is equal 1, storing said unique identifier with the corresponding object ID in the second database.

7. The method of detecting objects by means of the first and second databases generated according to any one of the preceding claims, comprising the steps of:

providing at least one feature vector extracted from a query object,
extracting at least one identifier from each feature vector,
comparing the at least one extracted identifier for the query object with the unique identifiers stored in the second database, and
outputting at least one object ID stored in the second database, wherein at least one unique identifier, preferably at least two unique identifiers, particularly preferably at least three unique identifiers coincide with corresponding identifiers of the query object.

8. The method according to any one of the preceding claims, wherein the object was recorded with a camera and the method is used for generating an image feature database and searching a query image in the image feature database.

9. The method according to claim 8, wherein, when generating the image feature database, each image is captured in at least one further rotational position and the image is preferably rotated by 30° and 60° with regard to the starting position and wherein the steps for extracting feature vectors and extracting identifiers are repeated.

10. The method according to claim 8 or 9, wherein the query image is captured in at least one further rotational position, preferably in a rotation of 45° vis-à-vis the starting position and wherein the feature vectors and the identifiers of the query image are repeatedly captured.

11. A device for generating an object database, wherein at least one feature vector being extracted from an object, wherein the object is an image, and a corresponding object ID are provided for a plurality of objects by a separate system, wherein the feature vectors are standardised and have a length of 1, comprising:

(a) an identifier extractor for extracting at least one identifier from each of the feature vectors, and
(b) a first storage for storing the at least one identifier together with the corresponding object ID for each object in a first database and for storing the feature vectors for each object in the first database,
further comprising:

a counter for determining the number of times every identifier is present for various objects in the first database, wherein the number of every identifier is stored in the first database, and
a filter verifying the number of every identifier, and
a second storage with a second database, wherein, in case the number of an identifier in the first database is equal 1, said unique identifier with the corresponding object ID is stored in the second database and in case the number of an identifier in the first database is higher than 1, said identifier possibly stored in the second database is deleted from the second database with the corresponding object ID.

12. The device for detecting objects by means of the second database generated according to claim 11, wherein at least one feature vector extracted from the query object is provided by a separate system, comprising:

an identifier extractor for extracting at least one identifier from every feature vector, and
an image finder for verifying whether an extracted identifier for the query object coincides with the unique identifiers stored in the second database and for outputting at least one object ID stored in the second database, wherein at least one unique identifier, preferably at least two unique identifiers, particularly preferably at least three unique identifiers coincide with corresponding identifiers of the query object.

13. The device according to claim 11 or 12, wherein the object was recorded with a camera and the device is used for generating an image feature database and searching a query image in the image feature database.

## Revendications

1. Procédé exécuté par ordinateur pour la création d'une base de données d'objets, comprenant les étapes suivantes :

   a) délivrance d'au moins un vecteur de caractéristique, extrait à partir d'un objet, ledit objet étant une image, et d'une ID d'objet associée pour une pluralité d'objets, les vecteurs de caractéristique étant normalisés et présentant une longueur égale à 1,
   b) extraction d'au moins un identifiant - "empreinte digitale" - à partir des vecteurs de caractéristique,
   c) mémorisation dudit au moins un identifiant avec l'ID d'objet associée pour chaque objet dans une première base de données, et
   d) mémorisation des vecteurs de caractéristique pour chaque objet dans la première base de données,
   avec les autres étapes suivantes :

   détermination du nombre d'occurrences de chaque identifiant pour différents objets dans la première base de données,
   mémorisation du nombre de chaque identifiant dans la première base de données, et
   au cas où le nombre d'un identifiant dans la première base de données est égal à 1, mémorisation de cet identifiant unique avec l'ID d'objet associée dans une deuxième base de données, et
   au cas où le nombre d'un identifiant dans la première base de données est supérieur à 1, suppression dans la deuxième base de données dudit identifiant éventuellement mémorisé dans la deuxième base de données avec l'ID d'objet associée.

2. Procédé selon la revendication 1, où chaque vecteur de caractéristique est n-dimensionnel, n étant le nombre de composantes de vecteur et chaque composante de vecteur comprenant m bits, n étant tout particulièrement égal à 128 et m à 8, et

où, lors de l'extraction de l'identifiant à partir d'un vecteur de caractéristique, le nombre de bits par composante de vecteur est diminué, préférentiellement ramené à un bit.

3. Procédé selon la revendication 2, comprenant les étapes suivantes :

   initialisation de tous les n caractères d'un identifiant à la valeur 1,
   comparaison de la valeur de chaque composante de vecteur du vecteur de caractéristique n-dimensionnel avec une première valeur seuil S1, et
   modification de contenu du $i^{\text{ème}}$ caractère correspondant de l'identifiant à la valeur 0, si la valeur de la $i^{\text{ème}}$ composante de vecteur est inférieure à la première valeur seuil S1, ladite première valeur seuil S1 étant préférentiellement la moyenne quadratique des valeurs de toutes les composantes de vecteur, et étant calculée conformément à la formule suivante :

$$S1 = \frac{1}{\sqrt{n}}$$

4. Procédé selon la revendication 3, comprenant les étapes suivantes :

   détermination du nombre de caractères k de l'identifiant, ayant été ramenés à 0,
   calcul de la somme des carrés des valeurs des composantes de vecteur, dont les caractères correspondants dans l'identifiant ont été ramenés à 0,
   comparaison des valeurs des composantes de vecteur avec une deuxième valeur seuil S2, où le $i^{\text{ème}}$ caractère correspondant dans l'identifiant a été ramené à 0, si la valeur de la $i^{\text{ème}}$ composante de vecteur est inférieure à la deuxième valeur seuil S2, ladite deuxième valeur seuil étant calculée conformément à la formule suivante :

$$S2 = \frac{(1-r)}{\sqrt{(n-k)}}$$

   où k est le nombre de caractères de l'identifiant qui ont été ramenés à 0, et r la somme des carrés des valeurs des composantes de vecteur associées dans le vecteur initial, et
   répétition des étapes précédentes, jusqu'à ce qu'aucun autre caractère de l'identifiant ne soit ramené à 0.

5. Procédé selon la revendication 4, où un premier identifiant obtenu est traité comme suit :

copie du premier identifiant,
modification d'une valeur d'au moins un caractère de l'identifiant copié de 1 à 0, ledit au moins un i$^{ème}$ caractère étant sélectionné sur la base de la valeur de la i$^{ème}$ composante de vecteur dans le vecteur de caractéristique et le ou les caractères où la valeur de la composante de vecteur étant inférieure à la dernière valeur seuil S2 calculée plus un premier écart A1 étant ramenés à 0, ou le ou les caractères sont fixés à 1, dont la composante de vecteur est supérieure ou égale à la dernière valeur seuil S2 calculée moins un premier écart A1, et
mémorisation du deuxième identifiant ainsi obtenu avec l'ID d'objet associée dans la première base de données et éventuellement dans la deuxième base de données, si ledit identifiant est unique, et
répétition des étapes précédentes avec un deuxième écart A2 supérieur au premier écart A1.

6. Procédé selon l'une des revendications précédentes, comprenant les étapes suivantes, si un des objets préparés est à nouveau supprimé :

suppression dudit au moins un identifiant relevant de l'objet supprimé et des vecteurs de caractéristique mémorisés dans la première base de données,
détermination du nombre d'occurrences restantes de l'identifiant supprimé dans la première base de données, et
au cas où le nombre dudit identifiant est égal à 0, suppression dudit identifiant dans la deuxième base de données, et au cas où le nombre est égal à 1, mémorisation dudit identifiant unique avec l'ID d'objet associée dans la deuxième base de données.

7. Procédé de détection d'objets au moyen de la première et de la deuxième bases de données créées selon l'une des revendications précédentes, comprenant les étapes suivantes :

préparation d'au moins un vecteur de caractéristique, extrait à partir d'un objet de demande,
extraction d'au moins un identifiant à partir de chaque vecteur de caractéristique,
comparaison dudit au moins un identifiant extrait pour l'objet de demande avec les identifiants univoques mémorisés dans la deuxième base de données, et
édition d'au moins une ID d'objet mémorisée dans la deuxième base de données, où au moins un identifiant unique, préférentiellement au moins deux identifiants uniques, tout particulièrement au moins trois identifiants uniques correspondent avec des identifiants correspondants respectifs de l'objet de demande.

8. Procédé selon l'une des revendications précédentes, où l'objet a été enregistré par une caméra et où le procédé de création d'une base de données de caractéristiques d'image est utilisé et sert pour la recherche d'une image de demande dans la base de données de caractéristiques d'image.

9. Procédé selon la revendication 8, où chaque image est saisie dans au moins une autre position de rotation lors de la création de la base de données de caractéristiques d'image et où l'image est en l'occurrence préférentiellement tournée de 30° et 60° par rapport à la position initiale, et où les étapes d'extraction de vecteurs de caractéristique et d'extraction d'identifiants sont répétées.

10. Procédé selon la revendication 8 ou la revendication 9, où l'image de demande est saisie dans au moins une autre position de rotation, préférentiellement lors d'une rotation de 45° par rapport à la position initiale, et où les vecteurs de caractéristique et les identifiants de l'image de demande sont saisis de manière répétée.

11. Dispositif pour la création d'une base de données d'objets, où au moins un vecteur de caractéristique, extrait à partir d'un objet, ledit objet étant une image, et une ID d'objet associée pour une pluralité d'objets sont délivrés par un système séparé, les vecteurs de caractéristique étant normalisés et présentant une longueur égale à 1, comprenant :

a) un extracteur d'identifiant pour l'extraction d'au moins un identifiant de chacun des vecteurs de caractéristique, et
b) une première mémoire pour la mémorisation dudit au moins un identifiant avec l'ID d'objet associée pour chaque objet dans une première base de données, et pour la mémorisation des vecteurs de caractéristique pour chaque objet dans la première base de données,
et comprenant en outre :

un compteur pour la détermination du nombre d'occurrences de chaque identifiant pour différents objets dans la première base de données, où le nombre de chaque identifiant étant mémorisé dans la première base de données, et
un filtre contrôlant le nombre de chacun des identifiants, et
une deuxième mémoire avec une deuxième base de données,

où au cas où le nombre d'un identifiant dans la première base de données est égal à 1, ledit identifiant univoque est mémorisé avec l'ID d'objet associée dans la deuxième base de données, et au cas où le nombre d'un identifiant dans la première base de données est supérieur à 1, ledit identifiant éventuellement mémorisé dans la deuxième base de données est supprimé dans la deuxième base de données avec l'ID d'objet associée.

12. Dispositif pour la détection d'objets au moyen de la deuxième base de données créée selon la revendication 11, où au moins un vecteur de caractéristique extrait à partir de l'objet de demande est délivré par un système séparé, comprenant :

   un extracteur d'identifiant pour l'extraction d'au moins un identifiant de chaque vecteurs de caractéristique, et
   un chercheur d'image pour contrôler si un identifiant extrait pour l'objet de demande correspond aux identifiants uniques mémorisés dans la deuxième base de données, et
   pour éditer au moins une ID d'objet mémorisée dans la deuxième base de données, où au moins un identifiant unique, préférentiellement au moins deux identifiants uniques, tout particulièrement au moins trois identifiants uniques correspondent avec des identifiants correspondants respectifs de l'objet de demande.

13. Dispositif selon la revendication 11 ou la revendication 12, où l'objet a été enregistré par une caméra et où le dispositif pour la création d'une base de données de caractéristiques d'image est utilisé et sert pour la recherche d'une image de demande dans la base de données de caractéristiques d'image.

# Figure 1

# Figure 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6711293 B1
- EP 1850270 A1
- EP 2138957 A2
- EP 000001850270 A1

**In der Beschreibung aufgeführte Nicht-Patentliteratur**

- **KRYSTIAN MIKOLAJCZYK ; CORDELIA SCHMID.** *Gradient Location and Orientation Histogram,* 2005, http://lear.inri-alpes.fr/pubs/2005/MS05/mikolajczyk_pami05.pdf http://en.wikipedia.org/wiki/GLOH
- **M. SAQUIB SARFRAZ ; OLAF HELLWICH.** *Local Energy based Shape Histogram,* 2008, http://srv-43-200.bv.tu-berlin.de/publications/pdf/Sarfraz_0108.pdf http://en.wikipedia.org/wiki/LESH
- **HERBERT BAY ; TINNE TUYTELAARS ; LUC VAN GOOL.** *Speeded Up Robust Features,* 2006, http://www.vision.ee.ethz.ch/~surf/eccv06.pdf
- **MARIUS MUJA ; DAVID LOWE.** *Fast Approximate Nearest Neighbors with Automatic Algorithm Configuration,* 2009, www.cs.ubc.ca/~lowe/papers/09muja.pdf
- **ALEXANDR ANDONI ; PIOTR INDYK.** *Approximate Nearest Neighbor in High Dimensions,* 2008, http://www.mit.edu/~andoni/papers/CACM-article.ps